# EUROPEAN PATENT APPLICATION

(11) **EP 4 827 219 A1**
(43) Date of publication of application: **21.10.2026**
(21) Application number: 24910520.6
(22) Date of filing: 29.11.2024
(51) Int. Cl.: H04W 72/542

(54) **COMMUNICATION METHOD AND APPARATUS**

(30) Priority: 27.12.2023 CN 202311832443
(71) Applicant: Huawei Technologies Co., Ltd., Shenzhen, Guangdong 518129 (CN)
(72) Inventor: WU, Chuanpeng, Shenzhen, Guangdong 518129 (CN); HE, Jia, Shenzhen, Guangdong 518129 (CN); ZHOU, Zhi, Shenzhen, Guangdong 518129 (CN)
(74) Representative: Maiwald GmbH
(86) International application number: PCT/CN2024/135644
(87) International publication number: WO 2025/139587

(57) **Abstract**

A communication method and apparatus are provided for improving sensing accuracy based on multiple-bounce scattering in bi-static sensing. In this application, the method includes: A first communication apparatus receives density information from a second communication apparatus, where the density information indicates a distribution of M first scattering points in a sensing space. The first communication apparatus determines coordinates of N second scattering points in the sensing space based on the density information. The first communication apparatus sends the coordinates of the N second scattering points in the sensing space to the second communication apparatus. M and N are integers greater than 1.

## Description

### CROSS-REFERENCE TO RELATED APPLICATIONS

This application claims priority to Chinese Patent Application No. 202311832443.2, filed with the China National Intellectual Property Administration on December 27, 2023 and entitled "COMMUNICATION METHOD AND APPARATUS", which is incorporated herein by reference in its entirety.

### TECHNICAL FIELD

Embodiments of this application relate to the wireless communication field, and in particular, to a communication method and apparatus.

### BACKGROUND

Sensing, also referred to as wireless sensing, involves transmitting electromagnetic energy into space and receiving radio waves reflected by objects present in the space, so that information about the objects, such as parameters including positions, directions, heights, speeds, sizes, and trajectories, can be calculated, and internal and external shapes and structures of the objects can be detected. Transmission, echoes, reflection, and scattering of radio waves are explored to sense and better understand the physical world. As one of electromagnetic wave sensing technologies, a wireless sensing technology can serve as an important alternative technology for security checks, hidden object detection, environment reconstruction, surveillance, and other aspects, due to its penetration capability and safety.

Currently, primary sensing modes include mono-static sensing (mono-static sensing) and single-bounce scattering in bi-static sensing (bi-static sensing). In mono-static sensing, sensing signals are transmitted and received by a same device. For example, a base station transmits sensing signals and receives the sensing signals scattered back by scattering points (scatter), and the base station performs sensing based on the transmitted sensing signals and the received sensing signals. In bi-static sensing, sensing signals are transmitted and received by different devices. For example, a base station transmits sensing signals, the sensing signals undergo single-bounce scattering and are then received by user equipment (user equipment, UE), and the UE performs sensing based on the received sensing signals. Due to limited sensing coverage in the two sensing modes: mono-static sensing and single-bounce scattering in bi-static sensing, a sensing mode of multiple-bounce scattering in bi-static sensing is further introduced. However, sensing accuracy based on the multiple-bounce scattering in bi-static sensing is lower than sensing accuracy in the foregoing two sensing modes.

How to improve the sensing accuracy based on the multiple-bounce scattering in bi-static sensing is a technical problem to be urgently resolved currently.

### SUMMARY

This application provides a communication method and apparatus for improving sensing accuracy based on multiple-bounce scattering in bi-static sensing.

According to a first aspect, this application provides a communication method. The communication method may be performed interactively by a first communication apparatus and a second communication apparatus.

The first communication apparatus may be UE, and the second communication apparatus may be a base station; or the first communication apparatus and the second communication apparatus may be two different base stations. Further, the first communication apparatus may alternatively be a module (for example, a chip) in a device. For example, the first communication apparatus is a module in a base station or UE. The second communication apparatus may alternatively be a module (for example, a chip) in a device. For example, the second communication apparatus is a module in a base station.

Alternatively, when a sensing management function (sensing management function, SMF) and a base station are separately deployed, the first communication apparatus may be the base station, and the second communication apparatus may be the SMF. Further, the SMF may be a network element in a hardware device, or a software function run on dedicated hardware, or a virtualization function instantiated on a platform (for example, a cloud platform). Optionally, the SMF may be implemented by one device, or may be implemented jointly by a plurality of devices, or may be a function module in one device. In addition, the first communication apparatus may alternatively be a module (for example, a chip) in a base station.

The communication method includes: The second communication apparatus sends density information to the first communication apparatus; and correspondingly, the first communication apparatus receives the density information from the second communication apparatus, where the density information indicates a distribution of M first scattering points in a sensing space. The first communication apparatus determines coordinates of N second scattering points in the sensing space based on the density information. The first communication apparatus sends the coordinates of the N second scattering points in the sensing space to the second communication apparatus. M and N are integers greater than 1.

In the foregoing technical solution, the second communication apparatus sends the density information to the first communication apparatus, where the density information is specifically the distribution of the M known scattering points in the sensing space. The first communication apparatus determines the coordinates of the N scattering points in the sensing space based on the density information. Based on the density information, accuracy of determining the coordinates of the scattering points in the sensing space by the first communication apparatus is improved, thereby improving sensing accuracy based on multiple-bounce scattering in bi-static sensing.

In a possible implementation, the sensing space includes a plurality of sensing subspaces, the density information includes density distribution information, and the density distribution information includes a quantity of first scattering points included in each of the plurality of sensing subspaces. For example, the first communication apparatus and the second communication apparatus pre-negotiate to use a first computational method to determine the coordinates of the N second scattering points. To be specific, after receiving the density information, the first communication apparatus may determine the coordinates of the N second scattering points based on the density distribution information in the density information by using the first computational method.

In the foregoing technical solution, when sending the density information to the first communication apparatus, the second communication apparatus does not need to indicate, to the first communication apparatus based on the density information, which computational method to use to determine the coordinates of the N second scattering points, helping reduce signaling interaction. In addition, the first communication apparatus does not need to determine, based on a format of the density distribution information, which computational method to use to determine the coordinates of the N second scattering points, helping reduce decision logic of the first communication apparatus.

In a possible implementation, the density information includes sensing coverage, the sensing space is determined based on the sensing coverage, and the sensing coverage is determined based on one or more of the following: a position of a transmit end of a sensing signal, a position of a receive end of a sensing signal, a transmitting angle of a sensing signal, or a receiving angle of a sensing signal. For example, the sensing coverage includes coordinate ranges of the sensing space along x-, y-, and z-axes in a world coordinate system.

In the foregoing technical solution, the density information includes the sensing coverage, and the first communication apparatus may determine the coordinates of the N second scattering points based on the density distribution information and the sensing coverage in the density information, helping further improve sensing accuracy based on multiple-bounce scattering in bi-static sensing.

In a possible implementation, the density information includes a type indication, and the type indication indicates the first communication apparatus to determine a computational method for the coordinates of the N second scattering points. For example, the computational method includes: The first communication apparatus determines the coordinates of the N second scattering points based on the quantity of the first scattering points included in each of the plurality of sensing subspaces, where the sensing space includes the plurality of sensing subspaces; and/or the first communication apparatus determines the coordinates of the N second scattering points based on coordinates of the M first scattering points.

In the foregoing technical solution, different type indications indicate different computational methods for determining the coordinates of the N second scattering points, and the first communication apparatus can determine, based on the type indication, the computational method corresponding to the type indication, helping improve sensing accuracy based on multiple-bounce scattering in bi-static sensing. In addition, the first communication apparatus may support using a plurality of computational methods to determine the coordinates of the N second scattering points, improving sensing flexibility.

In a possible implementation, when the first communication apparatus determines the coordinates of the N second scattering points in the sensing space based on the density information, specifically, the second communication apparatus may send a sensing signal to the first communication apparatus, and the first communication apparatus may determine the coordinates of the N second scattering points in the sensing space based on the density information and the received sensing signal.

In a possible implementation, when the first communication apparatus determines the coordinates of the N second scattering points in the sensing space based on the density information and the received sensing signal, specifically, the first communication apparatus determines, based on the received sensing signal, a transmission parameter corresponding to a transmission path of the sensing signal in the sensing space, where the transmission path includes the N second scattering points; and the first communication apparatus determines the coordinates of the N second scattering points in the sensing space based on the density information and the transmission parameter, where the transmission parameter includes at least one or more of the following: transmission duration of the sensing signal, a transmitting angle of the sensing signal, or a receiving angle of the sensing signal.

In the foregoing technical solution, the second communication apparatus sends a sensing signal to the first communication apparatus, and the first communication apparatus determines, based on the received sensing signal, a transmission parameter corresponding to a transmission path of the sensing signal in the sensing space, and then determines the coordinates of the N second scattering points in the sensing space based on the density information and the transmission parameter, helping further improve sensing accuracy based on multiple-bounce scattering in bi-static sensing.

According to a second aspect, this application provides a communication apparatus. The apparatus has functions for implementing the first communication apparatus or functions for implementing the second communication apparatus in the first aspect or any one of the possible implementations of the first aspect.

The functions of the communication apparatus may be implemented by hardware, or may be implemented by hardware executing corresponding software. The hardware or the software includes one or more modules, units, or means (means) corresponding to the functions.

In a possible implementation, a structure of the apparatus includes a processing module and a transceiver module. The processing module is configured to support the apparatus in implementing the functions of the first communication apparatus or the functions of the second communication apparatus in the first aspect or any one of the possible implementations of the first aspect. The transceiver module is configured to support communication between the apparatus and another communication device. For example, when the apparatus is the first communication apparatus, the apparatus may receive the density information from the second communication apparatus. The communication apparatus may further include a storage module. The storage module is coupled to the processing module, and stores program instructions and data that are necessary for the apparatus. In an example, the processing module may be a processor, the communication module may be a transceiver, the storage module may be a memory, and the memory may be integrated with the processor or may be disposed separately from the processor.

In another possible implementation, a structure of the apparatus includes a processor, and may further include a memory. The processor is coupled to the memory, and may be configured to execute computer program instructions stored in the memory, to enable the apparatus to implement the functions of the first communication apparatus or the functions of the second communication apparatus in the first aspect or any one of the possible implementations of the first aspect. Optionally, the apparatus further includes a communication interface, and the processor is coupled to the communication interface. When the apparatus is a network device or a terminal device, the communication interface may be a transceiver or an input/output interface. When the apparatus is a chip included in a network device or a chip included in a terminal device, the communication interface may be an input/output interface of the chip. Optionally, the transceiver may be a transceiver circuit, and the input/output interface may be an input/output circuit.

According to a third aspect, an embodiment of this application provides a chip system, including a processor and a memory. The processor is coupled to the memory. The memory is configured to store a program or instructions. When the program or the instructions are executed by the processor, the chip system is enabled to implement the functions of the first communication apparatus or the functions of the second communication apparatus in the first aspect or any one of the possible implementations of the first aspect.

Optionally, the chip system further includes an interface circuit, and the interface circuit is configured to exchange code instructions to the processor.

Optionally, there may be one or more processors in the chip system, and the processor may be implemented by using hardware or may be implemented by using software. When implemented by using hardware, the processor may be a logic circuit, an integrated circuit, or the like. When implemented by using software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory (read-only memory, ROM). The memory and the processor may be integrated on a same chip, or may be disposed separately on different chips.

According to a fourth aspect, this application provides a computer-readable storage medium. The computer-readable storage medium stores a computer program or instructions. When the computer program or the instructions are executed by a communication apparatus, the communication apparatus is enabled to implement the functions of the first communication apparatus or the functions of the second communication apparatus in the first aspect or any one of the possible implementations of the first aspect.

According to a fifth aspect, this application provides a computer program product. The computer program product includes a computer program or instructions. When the computer program or the instructions are executed by a communication apparatus, the communication apparatus is enabled to implement the functions of the first communication apparatus or the functions of the second communication apparatus in the first aspect or any one of the possible implementations of the first aspect.

According to a sixth aspect, an embodiment of this application provides a communication system. The communication system includes the first communication apparatus in the first aspect or any one of the possible implementations of the first aspect, and the second communication apparatus in the first aspect or any one of the possible implementations of the first aspect.

For technical effects that can be achieved in any one of the second aspect to the sixth aspect, refer to descriptions of beneficial effects in the first aspect. Details are not described herein again.

### BRIEF DESCRIPTION OF DRAWINGS

FIG. 1 is a diagram of an architecture of a communication system according to this application;
FIG. 2 is a diagram of scenarios in a mono-static sensing mode according to this application;
FIG. 3 is a diagram of scenarios in a bi-static sensing mode according to this application;
FIG. 4 is a diagram of an architecture of an integrated sensing and communication system according to this application;
FIG. 5 is a schematic flowchart of a communication method according to this application;
FIG. 6 is a diagram of a density matrix according to this application;
FIG. 7A to FIG. 7C are diagrams of a structure of density information according to this application;
FIG. 8A and FIG. 8B are diagrams of N bounces of scattering of a sensing signal in a sensing space according to this application;
FIG. 9 is a flowchart of a communication method in a first specific scenario according to this application;
FIG. 10 is a flowchart of a communication method in a second specific scenario according to this application;
FIG. 11 is a flowchart of a communication method in a third specific scenario according to this application;
FIG. 12 is a flowchart of a communication method in a fourth specific scenario according to this application;
FIG. 13 is a diagram of a structure of a communication apparatus according to this application; and
FIG. 14 is a diagram of a structure of another communication apparatus according to this application.

### DESCRIPTION OF EMBODIMENTS

The following first explains and describes related technical features in embodiments of this application. It should be noted that these explanations are intended to make embodiments of this application easier to understand, but should not be considered as a limitation on the protection scope claimed in this application.

The technical solutions in embodiments of this application may be applied to a new radio (new radio, NR) system, a long term evolution (long term evolution, LTE) system, an LTE frequency division duplex (frequency division duplex, FDD) system, LTE time division duplex (time division duplex, TDD), a worldwide interoperability for microwave access (worldwide interoperability for microwave access, WiMAX) communication system, and a next-generation wireless communication system, for example, 6G. This is not limited herein.

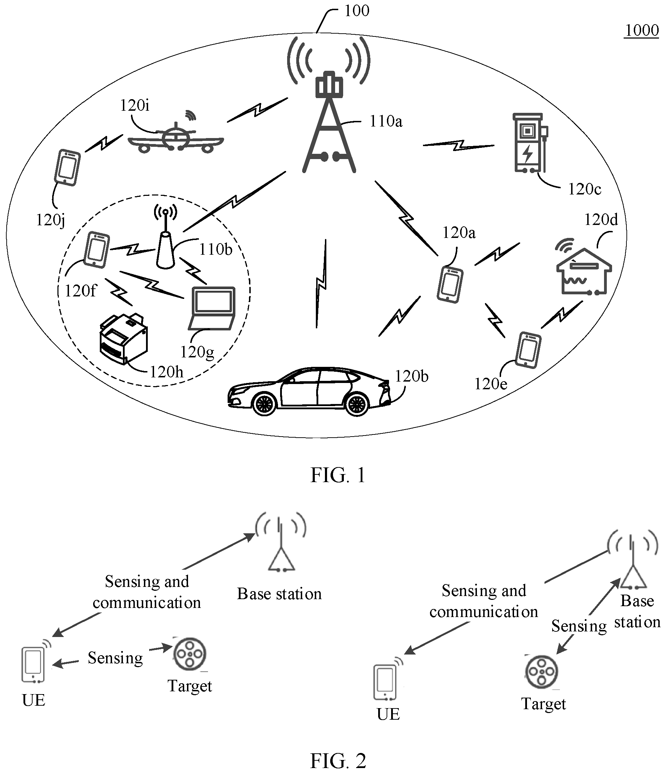

FIG. 1 is a diagram of an architecture of a communication system 1000 to which embodiments of this application are applied. As shown in FIG. 1, the communication system includes a radio access network 100. The radio access network 100 may include at least one radio access network device (for example, 110a and/or 110b in FIG. 1), and may further include at least one terminal device (for example, at least one of 120a to 120j in FIG. 1). The terminal device is connected to the access network device in a wireless manner, and the access network device is connected to a core network device in a wireless or wired manner. Terminal devices may be connected to each other in a wired or wireless manner, and radio access network devices may be connected to each other in a wired or wireless manner. FIG. 1 is merely a diagram. The communication system may further include another radio access network device, for example, may further include a wireless relay device and a wireless backhaul device, which are not shown in FIG. 1.

The radio access network device is a network-side device having a wireless transceiver function. The radio access network device may be an apparatus that is in the radio access network (radio access network, RAN) and that provides a wireless communication function for the terminal device, and is referred to as a RAN. For example, the radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, or an access node in a Wi-Fi system; or may be a module or unit for completing some functions of a base station, for example, may be a central unit (central unit, CU) or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications of the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node or a donor node. A specific technique and a specific device form factor that are used by the radio access network device are not limited in embodiments of this application.

In another possible scenario, a plurality of radio access network devices cooperate to assist the terminal device in implementing radio access, and different radio access network devices separately implement some functions. For example, the radio access network device may be a CU, a DU, a CU-control plane (control plane, CP), a CU-user plane (user plane, UP), or a radio unit (radio unit, RU). The CU and the DU may be separately disposed, or may be included in a same network element, for example, included in a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU (or the CU-CP and the CU-UP), the DU, or the RU may also have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal device is a user-side device having a wireless transceiver function. The terminal device may also be referred to as user equipment (user equipment, UE), a mobile station, a mobile terminal, or the like. The terminal device may be widely used in various scenarios, such as device-to-device (device-to-device, D2D), vehicle-to-everything (vehicle-to-everything, V2X) communication, machine-type communication (machine-type communication, MTC), Internet of Things (Internet of Things, IoT), virtual reality, augmented reality, industrial control, autonomous driving, telemedicine, a smart grid, smart furniture, smart office, smart wearable, smart transportation, and a smart city. The terminal device may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific apparatus form factor used by the terminal device are not limited in embodiments of this application.

The radio access network device and the terminal device may be at fixed positions, or may be movable. The radio access network device and the terminal device may be deployed on land, including an indoor or outdoor device, a handheld or on-board device; or may be deployed on water; or may be deployed on an airplane, a balloon, and an artificial satellite in the air. Application scenarios of the radio access network device and the terminal device are not limited in embodiments of this application.

Roles of the radio access network device and the terminal device may be relative. For example, the helicopter or uncrewed aerial vehicle 120i in FIG. 1 may be configured as a mobile radio access network device. For the terminal device 120j that accesses the radio access network 100 via 120i, the terminal device 120i is a radio access network device. However, for the radio access network device 110a, 120i is a terminal device, that is, 110a and 120i communicate with each other by using a radio air interface protocol. Certainly, 110a and 120i may alternatively communicate with each other through an interface protocol between radio access network devices. In this case, 120i is also a radio access network device relative to 110a. Therefore, both the radio access network device and the terminal device may be collectively referred to as communication apparatuses. 110a and 110b in FIG. 1 may be referred to as communication apparatuses having functions of the radio access network device, and 120a to 120j in FIG. 1 may be referred to as communication apparatuses having functions of the terminal device.

In embodiments of this application, the functions of the radio access network device may alternatively be performed by a module (for example, a chip) in the radio access network device, or may be performed by a control subsystem including the functions of the radio access network device. The control subsystem including the functions of the radio access network device herein may be a control center in the foregoing application scenarios such as a smart grid, industrial control, smart transportation, and a smart city. The functions of the terminal device may alternatively be performed by a module (for example, a chip or a modem) in the terminal device, or may be performed by an apparatus including the functions of the terminal device.

In the following, an example in which the radio access network device is a base station and the terminal device is UE is used for description. An example in which a method performed by the radio access network device, the module (for example, the chip) in the radio access network device, or the control subsystem including the functions of the radio access network device is performed by the base station is used for description. An example in which a method performed by the terminal device, the module (for example, the chip) in the terminal device, or the apparatus including the functions of the terminal device is performed by the UE is used for description.

Integrated sensing and communication means integration (integrate) of electromagnetic signals used for communication and electromagnetic signals used for sensing. Previous active positioning targets are primarily UEs that can transmit electromagnetic waves, such as mobile phones, vehicles, and Internet of Things (Internet of Things, IoT) devices. However, targets for virtual environment reconstruction further include passive objects, such as buildings, urban infrastructure (billboards and bridges), and transportation vehicles (cars and bicycles). Electromagnetic-wave signals propagated through a spatial environment are received to infer the composition of the spatial environment. A virtual environment (active and passive objects and devices) is detected and reconstructed to further assist in positioning or improving communication performance. The base station and the UE are primary devices for virtual environment reconstruction. Sensing quality is related to resources, space, time, frequency bands, power consumption, and sites of sensing and communication. The site may be a base station, UE, a wireless terminal access device (customer premise equipment, CPE), or the like.

Depending on whether transmit and receive ends of sensing signals are located at a same site or at different sites, sensing modes primarily include mono-static (mono-static) sensing, bi-static (bi-static) sensing, and multi-static (multi-static) sensing. The multi-static sensing is typically formed by mono-static sensing and bi-static sensing.

FIG. 2 is a diagram of scenarios in a mono-static sensing mode. A transmit end and a receive end are located at a same position. Sensing signals can be transmitted by leveraging data payloads. Therefore, the sensing function consumes no communication resources. In addition, because the transmit end and the receive end are co-located, problems of non-ideal factors, such as synchronization, do not exist, resulting in lower sensing algorithm complexity and higher estimation accuracy. Because sensing signals are transmitted and received at the same position, angular coverage that can be detected by using the signals is strongly correlated with an incidence angle in the environment. Reflected signals from objects decay rapidly as the incidence angle increases. This means that coverage of the spatial environment that can be sensed in the mono-static sensing mode is greatly affected by materials and placement angles of target objects. In the mono-static sensing, the sensing signals sent by the transmit end usually undergo single-bounce scattering and are then received by the receive end, resulting in high accuracy of inferring the spatial environment when the receive end infers the spatial environment.

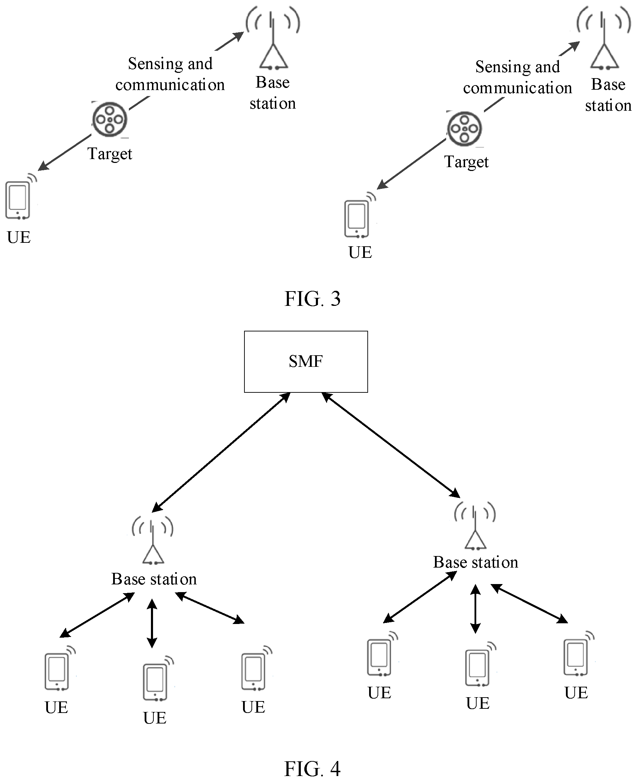

FIG. 3 is a diagram of scenarios in a bi-static sensing mode. A transmit end and a receive end are located at different positions. Sensing signals need to be dedicated pilot or known signals. Therefore, the sensing function needs to consume communication resources. In addition, because the transmit end and the receive end are not co-located, problems of non-ideal factors, such as synchronization and phase noise, exist, resulting in higher sensing algorithm complexity and lower estimation accuracy. This requires complex calibration algorithms for processing. In the bi-static sensing, because sensing signals are transmitted and received at different positions, coverage of the spatial environment that can be sensed is large. In addition, as the receive end moves, the coverage of the spatial environment that can be sensed also expands. Moreover, the sensing signals sent by the transmit end may undergo single-bounce scattering and then be received by the receive end, or may undergo multiple-bounce scattering and then be received by the receive end. Currently, accuracy of inferring the corresponding spatial environment based on the multiple-bounce scattering is lower than accuracy of inferring the corresponding spatial environment based on the single-bounce scattering, but coverage of the spatial environment that can be sensed based on the multiple-bounce scattering is larger than coverage of the spatial environment that can be sensed based on the single-bounce scattering.

Based on the diagram of the architecture of the communication system shown in FIG. 1 and the diagrams of the scenarios shown in FIG. 2 and FIG. 3, FIG. 4 is a diagram of an architecture of an integrated sensing and communication system according to an example of this application. The integrated sensing and communication system includes a sensing management function (sensing management function, SMF), a base station, and UE. There may be one or more SMFs, each SMF may be connected to one or more base stations, and each base station may be configured to serve one or more UEs. In FIG. 4, the SMF and the base station are separately deployed. However, during actual application, the SMF and the base station may be deployed together, for example, an SMF is deployed in a base station; and correspondingly, another base station is connected to the SMF deployed in the base station. It should be noted that the sensing function may have another name. This is not limited in this application.

The integrated sensing and communication system is configured to sense scattering points in a spatial environment. Specifically, it may be understood that the spatial environment may include a plurality of scatterers (such as buildings, urban infrastructure, and transportation vehicles). When a sensing signal is transmitted to a point on a scatterer, the point on the scatterer (referred to as a scattering point) scatters the sensing signal. Therefore, sensing computation specifically involves sensing coordinates of the scattering point on the scatterer, and further constructing a shape of the scatterer based on a plurality of scattering points.

Further, the SMF is configured to perform centralized storage, management, distribution, and computation on information about the scattering points in the spatial environment. The base station is configured to perform centralized storage, management, distribution, and computation on information about scatterers in a part of the spatial environment in which the base station is located.

In addition, in mono-static sensing, the base station may serve as a transmit end and a receive end to transmit and receive sensing signals, to sense the scattering points in the spatial environment. In bi-static sensing, the base station serves as a transmit end to transmit sensing signals, and the UE serves as a receive end to receive the sensing signals, so that the UE senses the scattering points in the spatial environment based on the received sensing signals. Alternatively, two base stations are a base station 1 and a base station 2. The base station 1 serves as a transmit end to transmit sensing signals, and the base station 2 serves as a receive end to receive the sensing signals, so that the base station 2 senses the scattering points in the spatial environment based on the received sensing signals. For other descriptions of the base station and the UE, refer to the descriptions in the embodiment related to FIG. 1.

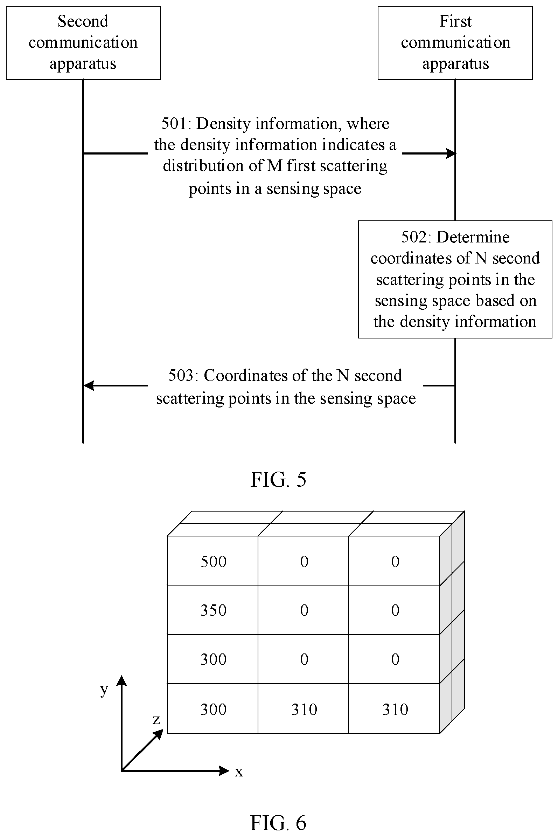

FIG. 5 is a schematic flowchart of a communication method according to an example of this application. The communication method introduces density information. The density information indicates a distribution of known scattering points in a sensing space. Then, the density information may be used for determining coordinates of a new scattering point, thereby helping improve sensing accuracy in a sensing mode of multiple-bounce scattering in bi-static sensing.

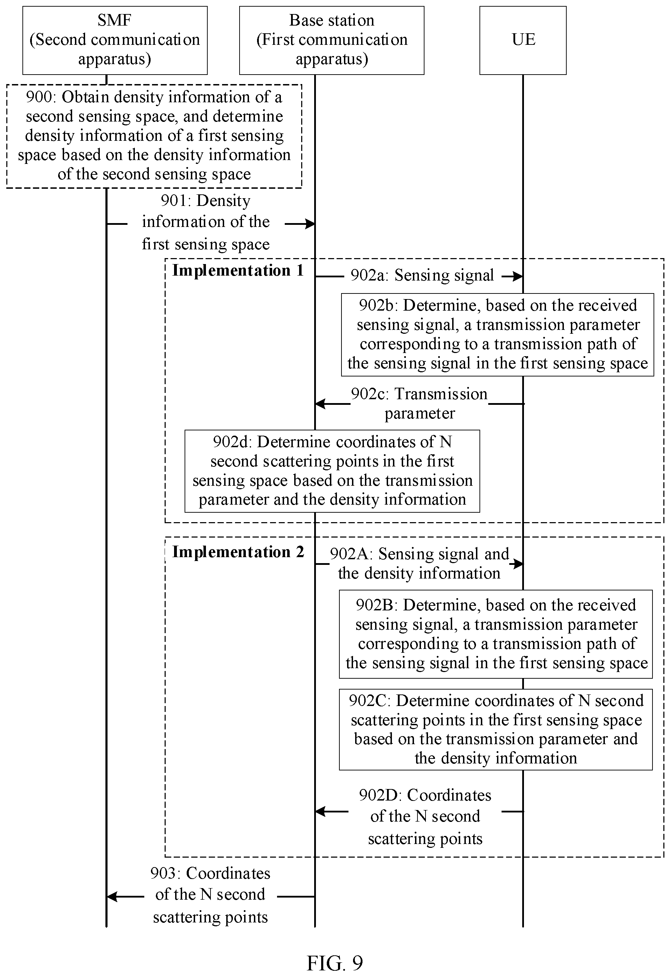

The communication method may be performed interactively by a first communication apparatus and a second communication apparatus. The first communication apparatus and the second communication apparatus may be respectively the base station and the SMF in FIG. 4, or may be respectively the two base stations (for example, the base station 2 and the base station 1) in FIG. 4, or may be respectively the UE and the base station in FIG. 4. For different implementations of the first communication apparatus and the second communication apparatus, refer to descriptions in the following specific embodiments in FIG. 9 to FIG. 12.

Step 501: The second communication apparatus sends density information to the first communication apparatus, and correspondingly, the first communication apparatus receives the density information from the second communication apparatus.

The density information indicates a distribution of M first scattering points in a sensing space, and M is an integer greater than 1.

Specifically, the density information includes density distribution information, and the density distribution information indicates the distribution of the M first scattering points in the sensing space. Content included in the density distribution information is explained below.

Implementation 1: The sensing space includes a plurality of sensing subspaces, and the density distribution information includes a quantity of first scattering points included in each of the plurality of sensing subspaces. For example, the second communication apparatus divides the sensing space into the plurality of sensing subspaces, and determines the quantity of first scattering points included in each sensing subspace. For example, the second communication apparatus stores coordinates of a plurality of known scattering points, and the second communication apparatus may determine, based on a boundary of each sensing subspace, a quantity of known scattering points (that is, the first scattering points) whose coordinates are in the sensing subspace.

In a specific implementation, the sensing space may be a large cuboid, and the second communication apparatus may divide the sensing space into a grid based on a preset length, width, and height, to obtain a plurality of grid cells, and then use the plurality of grid cells as the plurality of sensing subspaces.

For example, the second communication apparatus divides the sensing space into I grid cells in an x-axis direction, J grid cells in a y-axis direction, and K grid cells in a z-axis direction, to obtain I×J×K grid cells, where I, J, and K are integers greater than 1. Further, the second communication apparatus determines a quantity of first scattering points included in each grid cell, uses the quantity as a value of an element corresponding to the grid cell, and then generates a density matrix based on values of elements corresponding to all grid cells. The density matrix is the density distribution information.

FIG. 6 is a diagram of a density matrix according to an example of this application. The density matrix includes 3×4×2 elements, that is, I = 3, J = 4, and K = 2. The second communication apparatus divides a sensing space into 3×4×2 grid cells. Further, a value of an element at a position corresponding to (1, 1, 1) in the density matrix is 300, indicating that there are 300 first scattering points in a corresponding grid cell; a value of an element at a position corresponding to (2, 1, 1) in the density matrix is 310, indicating that there are 310 first scattering points in a corresponding grid cell; and so on. Details are not described again.

Implementation 2: The density distribution information includes coordinates of the M first scattering points. For example, the second communication apparatus stores coordinates of a plurality of known scattering points, and the second communication apparatus may determine, based on the coordinates of the plurality of known scattering points and a boundary of the sensing space, M known scattering points (that is, the M first scattering points) whose coordinates are in the sensing space, and coordinates of the M first scattering points.

In a possible implementation, the density information may include the density distribution information, and may also include sensing coverage and/or a type indication. The sensing coverage and the type indication are separately described below.

### (1) Sensing coverage

The sensing coverage may be a boundary of the sensing space.

In a possible implementation, the sensing coverage may be determined by the second communication apparatus based on one or more of the following: a position of a transmit end of a sensing signal, a position of a receive end of a sensing signal, a transmitting angle of a sensing signal, or a receiving angle of a sensing signal.

Optionally, the second communication apparatus is a transmit end of a sensing signal, for example, both the second communication apparatus and a transmit end are base stations in a bi-static sensing mode. Alternatively, the second communication apparatus is configured to manage a transmit end of a sensing signal, for example, the second communication apparatus is an SMF, and the transmit end is a base station.

Example 1: The second communication apparatus determines the sensing coverage based on a position of a transmit end of a sensing signal. For example, a distance between any position in the sensing coverage and the position of the transmit end of the sensing signal is less than a first preset value.

For example, the first preset value is determined based on a transmit power for the transmit end to transmit the sensing signal, a minimum detectable power of a receive end, a transmit antenna gain, a receive antenna gain, and a frequency of the sensing signal. For example, the second communication apparatus determines the first preset value according to the following Formula 1: $d = {10}^{\left[\left({P}_{t}-{P}_{r , min}+{G}_{t}+{G}_{r}-20{log}_{10}\left(f\right)+147.56\right)/20\right]}$ Formula 1

Herein, *d* is the first preset value, *Pₜ* is the transmit power for the transmit end to transmit the sensing signal, *P_{r,min}* is the minimum detectable power of the receive end, *Gₜ* is the transmit antenna gain, *Gᵣ* is the receive antenna gain, and *f* is the frequency of the sensing signal.

Further, with reference to Formula 1, for example, the transmit power for the transmit end to transmit the sensing signal is 10 dBm, the minimum detectable power of the receive end is -60 dBm, both the transmit antenna gain and the receive antenna gain are 5 dBi, and the frequency f of the sensing signal is 2.4 GHz. Then, the second communication apparatus may determine, through calculation according to Formula 1, that the first preset value d is approximately 99.5 m.

Example 2: The second communication apparatus determines the sensing coverage based on a transmitting angle of a sensing signal at a transmit end. For example, an angle difference between an angle of a line connecting any position in the sensing coverage and the transmit end, and the transmitting angle of the sensing signal sent by the transmit end is less than a second preset value. The second preset value may be 1°, 5°, 10°, or another value.

Example 3: The second communication apparatus determines the sensing coverage based on a position of a receive end of a sensing signal. For example, a distance between any position in the sensing coverage and the position of the receive end of the sensing signal is less than a third preset value. For example, the third preset value is determined based on a transmit power for a transmit end to transmit the sensing signal, a minimum detectable power of the receive end, a transmit antenna gain, a receive antenna gain, and a frequency of the sensing signal. For example, the second communication apparatus determines the third preset value according to Formula 1 in Example 1.

Example 4: The second communication apparatus determines the sensing coverage based on a receiving angle of a sensing signal at a receive end. For example, an angle difference between an angle of a line connecting any position in the sensing coverage and the receive end, and the receiving angle of the sensing signal received by the receive end is less than a fourth preset value. The fourth preset value may be 1°, 5°, 10°, or another value.

Example 5: The second communication apparatus determines the sensing coverage based on a position of a transmit end of a sensing signal and a transmitting angle of the sensing signal at the transmit end. For example, a distance between any position in the sensing coverage and the position of the transmit end of the sensing signal is less than a first preset value, and an angle difference between an angle of a line connecting any position in the sensing coverage and the transmit end, and the transmitting angle of the sensing signal sent by the transmit end is less than a second preset value.

Example 6: The second communication apparatus determines the sensing coverage based on a position of a receive end of a sensing signal and a receiving angle of the sensing signal at the receive end. For example, a distance between any position in the sensing coverage and the position of the receive end of the sensing signal is less than a third preset value, and an angle difference between an angle of a line connecting any position in the sensing coverage and the receive end, and the receiving angle of the sensing signal received by the receive end is less than a fourth preset value.

Example 7: The second communication apparatus determines the sensing coverage based on a position of a transmit end of a sensing signal and a position of a receive end of the sensing signal. For example, a distance between any position in the sensing coverage and the position of the transmit end of the sensing signal is less than a first preset value, or a distance between any position in the sensing coverage and the position of the receive end of the sensing signal is less than a third preset value.

Example 8: The second communication apparatus determines the sensing coverage based on a transmitting angle of a sensing signal at a transmit end and a receiving angle of the sensing signal at a receive end. For example, an angle difference between an angle of a line connecting any position in the sensing coverage and the transmit end, and the transmitting angle of the sensing signal sent by the transmit end is less than a second preset value, or an angle difference between an angle of a line connecting any position in the sensing coverage and the receive end, and the receiving angle of the sensing signal received by the receive end is less than a fourth preset value.

The foregoing descriptions merely provide examples of possible manners in which the second communication apparatus determines the sensing coverage. The second communication apparatus may determine the sensing coverage in another manner. This is not limited in this application. For manners of determining the preset values in Example 5 to Example 8, refer to descriptions in Example 1 to Example 4.

In a possible implementation, the sensing coverage may be coordinate ranges of the sensing space along x-, y-, and z-axes in a world coordinate system. For example, in the world coordinate system, the sensing coverage may be represented as (x_min, x_max, y_min, y_max, z_min, z_max), or represented as (x_min, x_delta, y_min, y_delta, z_min, z_delta), or represented as (x_max, x_delta, y_max, y_delta, z_max, z_delta), where x_min, x_max, and x_delta are respectively a minimum coordinate, a maximum coordinate, and a change amount of the sensing coverage on the x-axis in the world coordinate system, y_min, y_max, and y_delta are a minimum coordinate, a maximum coordinate, and a change amount of the sensing coverage on the y-axis in the world coordinate system, and z_min, z_max, and z_delta are a minimum coordinate, a maximum coordinate, and a change amount of the sensing coverage on the z-axis in the world coordinate system.

Further, in Example 1, the second communication apparatus may first determine, based on the position of the transmit end of the sensing signal, coverage (denoted as preset coverage) where a distance between any position in the coverage and the position of the transmit end of the sensing signal is less than the first preset value, and then determine the sensing coverage based on the preset coverage. For example, the sensing coverage includes the preset coverage, or the sensing coverage is determined from the preset coverage. In Example 2, the second communication apparatus first determines, based on the transmitting angle of the sensing signal at the transmit end, coverage (denoted as preset coverage) where an angle difference between an angle of a line connecting any position in the coverage and the transmit end, and the transmitting angle of the sensing signal sent by the transmit end is less than the second preset value, and then determines the sensing coverage based on the preset coverage. For example, the sensing coverage includes the preset coverage, or the sensing coverage includes a part of the preset coverage, or the sensing coverage is determined from the preset coverage. Other examples have similar processes.

### (2) Type indication

Optionally, the density information further includes a type indication, and the type indication indicates the first communication apparatus to determine a computational method for the coordinates of the N second scattering points. It should be noted that the first communication apparatus may include a plurality of computational methods. When determining the coordinates of the N second scattering points in the sensing space based on the density information, the first communication apparatus may first select, based on the type indication, the computational method corresponding to the type indication from the plurality of computational methods, and then determine the coordinates of the N second scattering points in the sensing space by using the selected computational method based on the density information (refer to descriptions in step 502).

In a possible manner, there is a correspondence between the type indication and the computational method. When the type indication is a first type indication, the computational method corresponding to the type indication is a first computational method; when the type indication is a second type indication, the computational method corresponding to the type indication is a second computational method; when the type indication is a third type indication, the computational method corresponding to the type indication is a third computational method; and so on.

For example, a value of the type indication indicates which specific type indication it is. For example, when the value of the type indication is 0, the type indication is the first type indication; when the value of the type indication is 1, the type indication is the second type indication; when the value of the type indication is 2, the type indication is the third type indication; and so on. In another example, a field of the type indication occupies two bits. When the field of the type indication is 00, the type indication is the first type indication; when the field of the type indication is 01, the type indication is the second type indication; when the field of the type indication is 10, the type indication is the third type indication; and so on.

In another possible manner, the type indication indicates a format of the density distribution information and/or a manner of determining the sensing coverage. Further, there is a correspondence between the computational method and the format of the density distribution information and/or the manner of determining the sensing coverage.

For example, when the type indication is a first type indication, the type indication represents that the density distribution information includes a quantity of first scattering points in a plurality of sensing subspaces, and then indicates that the computational method is a first computational method; when the type indication is a second type indication, the type indication represents that the density distribution information includes coordinates of M first scattering points and the sensing coverage is based on a position of a transmit end of a sensing signal, and then indicates that the computational method is a second computational method; when the type indication is a third type indication, the type indication represents that the density distribution information includes coordinates of M first scattering points and the sensing coverage is determined based on a transmitting angle of a sensing signal, and then indicates that the computational method is a third computational method; and so on.

Certainly, the type indication may be another type indication that indicates another computational method, or the type indication may be another type indication that indicates another format of the density distribution information and/or another manner of determining the sensing coverage. With reference to the examples in Example 1 to Example 6, for example, the type indication may alternatively be a fourth type indication, and the fourth type indication represents that the density distribution information includes coordinates of M first scattering points and the sensing coverage is determined based on a position of a receive end of a sensing signal, and then indicates that the computational method is a fourth computational method. In another example, the type indication may alternatively be a fifth type indication, and the fifth type indication represents that the density distribution information includes coordinates of M first scattering points and the sensing coverage is determined based on a receiving angle of a sensing signal, and then indicates that the computational method is a fifth computational method.

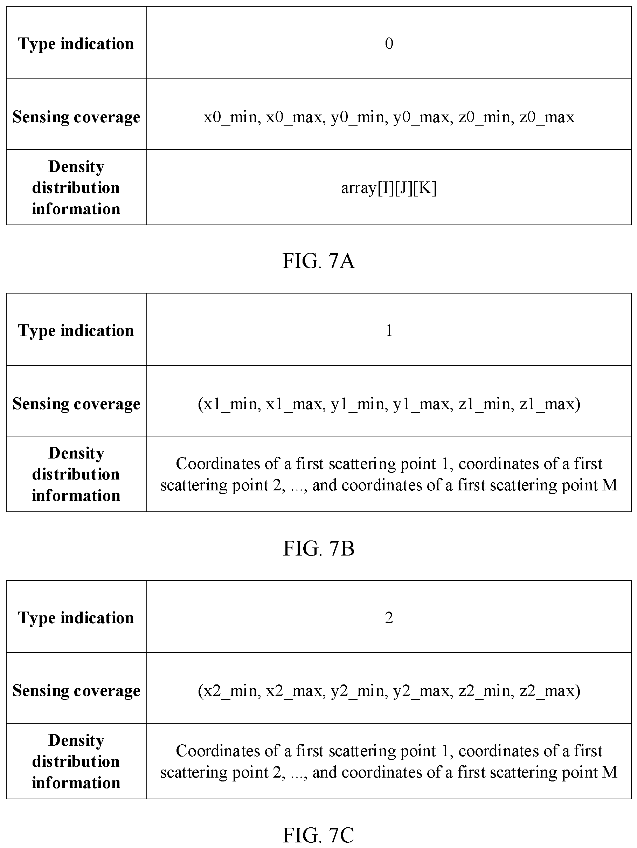

FIG. 7A to FIG. 7C are diagrams of a structure of density information according to an example of this application. The density information includes a type indication, sensing coverage, and density distribution information. As shown in FIG. 7A, a value of the type indication is 0, a value of the sensing coverage is (x0_min, x0_max, y0_min, y0_max, z0_min, z0_max), the density distribution information is a density matrix M, the density matrix M includes I×J×K elements, the density matrix M may be represented as array[I][J][K], and a value of an element in an i^{th} row, a j^{th} column, and a k^{th} layer in the density matrix M is a quantity of first scattering points in a grid cell in the i^{th} row, the j^{th} column, and the k^{th} layer, where i ranges over integers in [1, I], j ranges over integers in [1, J], and k ranges over integers in [1, K]. As shown in FIG. 7B, a value of the type indication is 1, a value of the sensing coverage is (x1_min, x1_max, y1_min, y1_max, z1_min, z1_max), and a value of the density distribution information is coordinates of a first scattering point 1, coordinates of a first scattering point 2, ..., and coordinates of a first scattering point M. As shown in FIG. 7C, a value of the type indication is 2, a value of the sensing coverage is (x2_min, x2_max, y2_min, y2_max, z2_min, z2_max), and a value of the density distribution information is coordinates of a first scattering point 1, coordinates of a first scattering point 2, ..., and coordinates of a first scattering point M.

Optionally, before step 501, the second communication apparatus may first obtain the density information of the sensing space. For example, the second communication apparatus determines the density information of the sensing space based on a sensing mode of mono-static sensing or a sensing mode of single-bounce scattering in bi-static sensing. In another example, the second communication apparatus obtains the density information of the sensing space from another apparatus. For specific descriptions, refer to descriptions in embodiments related to FIG. 9 to FIG. 12.

Step 502: The first communication apparatus determines coordinates of N second scattering points in the sensing space based on the density information. The N second scattering points are specifically corresponding scattering points at which the sensing signal undergoes N bounces of scattering in the sensing space, and N is an integer greater than 1.

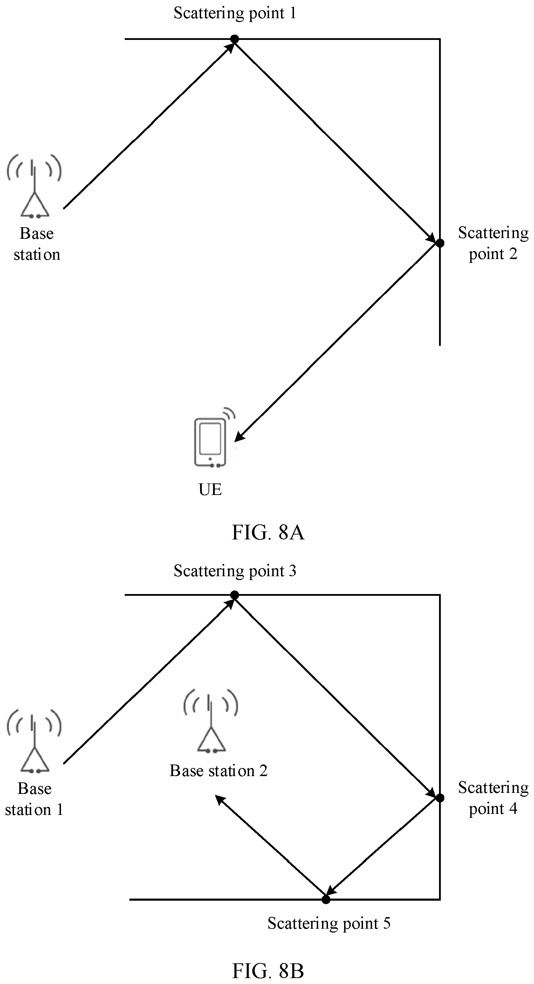

FIG. 8A and FIG. 8B are diagrams of N bounces of scattering of a sensing signal in a sensing space according to an example of this application. As shown in FIG. 8A, a transmit end of the sensing signal is a base station, a receive end of the sensing signal is UE, the sensing signal is sent by the base station and is received by the UE after two bounces of scattering, and scattering points corresponding to the two bounces of scattering are a scattering point 1 and a scattering point 2, where N = 2. As shown in FIG. 8B, a transmit end of the sensing signal is a base station 1, a receive end of the sensing signal is a base station 2, the sensing signal is sent by the base station 1 and is received by the base station 2 after three bounces of scattering, and scattering points corresponding to the three bounces of scattering are a scattering point 3, a scattering point 4, and a scattering point 5, where N = 3.

In a first possible implementation, the density information includes density distribution information, and the density distribution information specifically includes a quantity of first scattering points included in each of the plurality of sensing subspaces. The first communication apparatus may obtain the density distribution information from the density information, and determine, based on a format of the density distribution information (for example, the density matrix in FIG. 6), the use of a first computational method to determine the coordinates of the N second scattering points in the sensing space. In another possible implementation, the second communication apparatus and the first communication apparatus may predefine the use of the first computational method. In this way, the first communication apparatus does not need to determine, based on the format of the density distribution information, the use of the first computational method, helping reduce determining steps of the first communication apparatus.

For example, the density information further includes sensing coverage. The first communication apparatus inputs the density distribution information and the sensing coverage to the first computational method, to obtain the coordinates of the N second scattering points in the sensing space. In this way, the coordinates of the second scattering points in the sensing space are determined based on the sensing coverage and the density distribution information, helping improve sensing accuracy. In addition, each time the density information is sent to the first communication apparatus, the second communication apparatus may include the sensing coverage in the density information. In other words, the second communication apparatus may determine, based on the sensing coverage at each time, the coordinates of the second scattering points in the sensing space corresponding to the sensing coverage. Different density information can carry different sensing coverage. In other words, the first communication apparatus can determine coordinates of second scattering points in different sensing spaces, helping improve sensing flexibility.

In a second possible implementation, the density information includes the density distribution information, and also includes a type indication. The first communication apparatus may first obtain the type indication from the density information, and select, based on the type indication, a computational method corresponding to the type indication from a plurality of computational methods, that is, select the computational method for determining the coordinates of the N second scattering points in the sensing space.

In an example, there is a correspondence between the type indication and the computational method. If the type indication is a first type indication, the first communication apparatus determines the use of a first computational method based on the first type indication. If the type indication is a second type indication, the first communication apparatus determines the use of a second computational method based on the second type indication. If the type indication is a third type indication, the first communication apparatus determines the use of a third computational method based on the third type indication.

In another example, the type indication indicates a format of the density distribution information and/or a manner of determining the sensing coverage, and there is a correspondence between the computational method and the format of the density distribution information and/or the manner of determining the sensing coverage. If the type indication is a first type indication, the first communication apparatus determines, based on the first type indication, that the density distribution information includes a quantity of first scattering points included in each of a plurality of sensing subspaces, and then determines the use of a first computational method. If the type indication is a second type indication, the first communication apparatus determines, based on the second type indication, that the density distribution information includes coordinates of M first scattering points and the sensing coverage is determined based on a position of a transmit end of a sensing signal, and then determines the use of a second computational method. If the type indication is a third type indication, the first communication apparatus determines, based on the third type indication, that the density distribution information includes coordinates of M first scattering points and the sensing coverage is determined based on a transmitting angle of a sensing signal, and then determines the use of a third computational method.

For example, the density information further includes sensing coverage. The first communication apparatus inputs the density distribution information and the sensing coverage to the computational method corresponding to the type indication, to obtain the coordinates of the N second scattering points in the sensing space. For effects of including the sensing coverage in the density information, refer to the description in the first possible implementation.

In the foregoing technical solution, different type indications indicate different computational methods for determining the coordinates of the N second scattering points, and the first communication apparatus can determine, based on the type indication, the computational method corresponding to the type indication, helping improve sensing accuracy. In addition, the first communication apparatus may support using a plurality of computational methods to determine the coordinates of the N second scattering points, improving sensing flexibility.

In a specific implementation, the density distribution information indicates a distribution of first scattering points, that is, indicates that scattering points are densely distributed in some spaces in the sensing space, while scattering points are sparsely distributed in other spaces. The first communication apparatus may obtain coordinates of a plurality of groups of N scattering points in the sensing space through calculation. The first communication apparatus may determine a group of coordinates, in the plurality of groups of coordinates, that are in the spaces in which scattering points are densely distributed, and then use the group of coordinates as finally determined coordinates of N second scattering points.

With reference to the example in FIG. 6, the density distribution information (that is, the density matrix) includes 3×4×2 elements, 24 elements in total, and the second communication apparatus divides the sensing space into 3×4×2 grid cells, 24 grid cells in total. Further, a value of an element at a position corresponding to (1, 1, 1) in the density matrix is 300, indicating that there are 300 first scattering points in a corresponding grid cell; a value of an element at a position corresponding to (2, 1, 1) in the density matrix is 310, indicating that there are 310 first scattering points in a corresponding grid cell; a value of an element at a position corresponding to (3, 1, 1) in the density matrix is 310, indicating that there are 310 first scattering points in a corresponding grid cell; a value of an element at a position corresponding to (2, 2, 1) in the density matrix is 0, indicating that there is no first scattering point in a corresponding grid cell; and so on. A total quantity of first scattering points included in the 24 grid cells is M, for example, M = 3000. Further, the first communication apparatus may obtain coordinates of two groups of N scattering points in the sensing space through calculation. For example, N = 2, coordinates of N scattering points in a first group are denoted as (x₁, y₁, z₁) and (x₂, y₂, z₂), and coordinates of N scattering points in a second group are denoted as (x₃, y₃, z₃) and (x₄, y₄, z₄). The first communication apparatus determines that (x₁, y₁, z₁) is in the grid cell corresponding to (1, 1, 1) in the density matrix and (x₂, y₂, z₂) is in the grid cell corresponding to (2, 1, 1) in the density matrix, and determines that (x₃, y₃, z₃) is in the grid cell corresponding to (1, 1, 1) in the density matrix and (x₄, y₄, z₄) is in the grid cell corresponding to (2, 2, 1) in the density matrix. Then, the first communication apparatus may determine that (x₁, y₁, z₁) and (x₂, y₂, z₂) are more accurate, that is, determine that (x₁, y₁, z₁) and (x₂, y₂, z₂) are the coordinates of the N second scattering points.

Step 503: The first communication apparatus sends the coordinates of the N second scattering points in the sensing space to the second communication apparatus, and correspondingly, the second communication apparatus receives the coordinates of the N second scattering points in the sensing space from the first communication apparatus.

Optionally, the first communication apparatus further sends, to the second communication apparatus, one or more of the following content: identifiers of the N second scattering points, confidence levels of the coordinates of the N second scattering points, moving speeds of the N second scattering points, a transmitting angle of the sensing signal, a receiving angle of the sensing signal, a receive power of the sensing signal, a sensing mode of N-bounce scattering in bi-static sensing, and a confidence level corresponding to a sensing mode of N-bounce scattering in bi-static sensing.

Optionally, after receiving the coordinates of the N second scattering points in the sensing space, the second communication apparatus may use the coordinates of the N second scattering points in the sensing space as coordinates of known scattering points for subsequent sensing, helping further improve sensing accuracy.

In the communication method shown in FIG. 5, the second communication apparatus sends the density information to the first communication apparatus (that is, indicates the distribution of the M first scattering points in the sensing space to the first communication apparatus), and the first communication apparatus determines the coordinates of the N second scattering points in the sensing space based on the density information and sends the coordinates of the N second scattering points in the sensing space to the second communication apparatus. Based on the density information, accuracy of determining the coordinates of the N second scattering points in the sensing space by the first communication apparatus is improved, thereby improving sensing accuracy based on multiple-bounce scattering in bi-static sensing.

With reference to the diagram of the architecture of the integrated sensing and communication system shown in FIG. 3 and the flowchart of the communication method shown in FIG. 5, FIG. 9 is a flowchart of a communication method in a first specific scenario according to an example of this application.

In FIG. 9, the second communication apparatus is specifically an SMF, the first communication apparatus is specifically a base station, the SMF and the base station are separately deployed, a transmit end of a sensing signal is the base station, a receive end of the sensing signal is UE, and the sensing space is specifically a first sensing space.

Step 901: The SMF sends density information of the first sensing space to the base station, and correspondingly, the base station receives the density information of the first sensing space from the SMF. The density information of the first sensing space indicates a distribution of M first scattering points in the first sensing space. For content included in the density information of the first sensing space, refer to the description in step 501, where the "sensing space" may be replaced with the "first sensing space".

Optionally, before step 901, the method further includes step 900: The SMF obtains density information of a second sensing space, and determines the density information of the first sensing space based on the density information of the second sensing space. There is an intersection between the first sensing space and the second sensing space. For example, the first sensing space is a subset of the second sensing space. For example, the SMF may use, as the density information of the first sensing space, density information of a sensing space corresponding to the intersection between the first sensing space and the second sensing space.

When the SMF obtains the density information of the second sensing space, there may be specifically the following two examples.

Example 1: The SMF is connected to one or more base stations, the SMF indicates each base station to determine coordinates of scattering points in a sensing space corresponding to the base station based on a sensing mode of mono-static sensing or a sensing mode of single-bounce scattering in bi-static sensing, and then the SMF obtains coordinates of scattering points in sensing spaces corresponding to the one or more base stations, and generates coordinates of a plurality of known scattering points in the second sensing space.

Example 2: The SMF obtains the density information of the second sensing space from another management apparatus. For example, if the second sensing space is a city street, the SMF may obtain boundaries of a plurality of scatterers (such as buildings and urban infrastructure) on the city street from a management apparatus arranged on the city street, and then obtain density information of the city street. In another example, if the second sensing space is an office, the SMF may obtain boundaries of a plurality of scatterers (such as desks and chairs, water dispensers, and printers) in the office from a management apparatus arranged in the office, and then obtain density information of the office.

Step 902: The base station determines coordinates of N second scattering points in the first sensing space based on the density information of the first sensing space.

Step 902 may specifically include the following two implementations.

### Implementation 1:

Step 902a: The base station sends a sensing signal to the UE, and correspondingly, the UE receives the sensing signal from the base station.

Step 902b: The UE determines, based on the received sensing signal, a transmission parameter corresponding to a transmission path of the sensing signal in the first sensing space.

The sensing signal is received by the UE after N bounces of scattering in the first sensing space. In other words, the transmission path of the sensing signal in the first sensing space includes the N second scattering points. For specific descriptions, refer to the description in the embodiment related to FIG. 8A.

Optionally, the sensing signal carries a transmitting angle and transmitting time of the sensing signal. The UE determines the transmission parameter based on receiving time and a receiving angle of the sensing signal, and the transmitting angle and the transmitting time of the sensing signal that are obtained from the sensing signal.

Step 902c: The UE sends the transmission parameter to the base station. Correspondingly, the base station receives the transmission parameter from the UE.

Step 902d: The base station determines the coordinates of the N second scattering points in the first sensing space based on the transmission parameter and the density information of the first sensing space.

In a possible implementation, the density information of the first sensing space includes density distribution information, and the density distribution information specifically includes a quantity of first scattering points included in each of the plurality of sensing subspaces. For example, the density information of the first sensing space further includes sensing coverage. The base station inputs the transmission parameter, the density distribution information, and the sensing coverage to a first computational method, to obtain the coordinates of the N second scattering points in the first sensing space.

In another possible implementation, the density information of the first sensing space includes the density distribution information, and also includes a type indication. The base station may first obtain the type indication from the density information of the first sensing space, and select, based on the type indication, a computational method corresponding to the type indication from a plurality of computational methods. For example, the density information of the first sensing space further includes sensing coverage. The base station inputs the transmission parameter, the density distribution information, and the sensing coverage to the computational method corresponding to the type indication, to obtain the coordinates of the N second scattering points in the first sensing space.

For content that is not described in detail in step 902d, refer to the description in step 502, where the "first communication apparatus" in step 502 may be replaced with the "base station", and the "sensing space" in step 502 may be replaced with the "first sensing space".

It should be noted that, in step 902a to step 902d, there may be one or more UEs.

For example, the one or more UEs are located in a coverage area of the base station. The base station may broadcast sensing signals. Correspondingly, the one or more UEs located in the coverage area of the base station may receive the sensing signals from the base station. Each UE may determine, based on the received sensing signal, a transmission parameter corresponding to a transmission path of the sensing signal in the first sensing space, and send the transmission parameter to the base station. The base station may determine the coordinates of the N second scattering points in the first sensing space based on the transmission parameters from the one or more UEs, and the density information of the first sensing space. In this case, in step 902d, the transmission parameter is a transmission parameter from the one or more UEs.

In another example, a coverage area of the base station includes one or more UEs, and the base station may further select UE from the one or more UEs based on the sensing coverage. Alternatively, the SMF records positions of UEs and a coverage area of the base station. The SMF determines, based on the coverage area of the base station and the positions of the UEs, one or more UEs located in the coverage area of the base station, then selects UE from the one or more UEs based on the sensing coverage, and sends an identifier of the selected UE to the base station. Further, the base station sends sensing signals to the selected one or more UEs. The selected one or more UEs may receive the sensing signals from the base station. Each UE determines, based on the received sensing signal, a transmission parameter corresponding to a transmission path of the sensing signal in the first sensing space, and sends the transmission parameter to the base station. The base station may determine the coordinates of the N second scattering points in the first sensing space based on the transmission parameters from the selected one or more UEs, and the density information of the first sensing space. In this case, in step 902d, the transmission parameter is a transmission parameter from the selected one or more UEs.

Because a computational capability of the base station is greater than a computational capability of the UE, and the base station can obtain transmission parameters of a plurality of UEs, in Implementation 1, the base station determining coordinates of N scattering points is applicable to a scenario with a large data amount, for example, a scenario of sensing urban building clusters, and can obtain accurate coordinates of scattering points. The density information of the first sensing space is not sent to the UE, helping ensure information security.

### Implementation 2:

Step 902A: The base station sends a sensing signal and the density information of the first sensing space to the UE, and correspondingly, the UE receives the sensing signal and the density information of the first sensing space from the base station.

Step 902B: The UE determines, based on the received sensing signal, a transmission parameter corresponding to a transmission path of the sensing signal in the first sensing space. For a specific implementation of step 902B, refer to step 902b in Implementation 1.

Step 902C: The UE determines the coordinates of the N second scattering points in the first sensing space based on the transmission parameter and the density information of the first sensing space.

In a possible implementation, the density information of the first sensing space includes density distribution information, and the density distribution information specifically includes a quantity of first scattering points included in each of the plurality of sensing subspaces. For example, the density information of the first sensing space further includes sensing coverage. The UE inputs the transmission parameter, the density distribution information, and the sensing coverage to a first computational method, to obtain the coordinates of the N second scattering points in the first sensing space. In this manner, the base station and the UE may pre-negotiate to use the first computational method, or the UE determines, based on a format of the density distribution information, the use of the first computational method to determine the coordinates of the N second scattering points in the first sensing space.

In another possible implementation, the density information of the first sensing space includes the density distribution information, and also includes a type indication. The UE may first obtain the type indication from the density information of the first sensing space, and select, based on the type indication, a computational method corresponding to the type indication from a plurality of computational methods. For example, the density information of the first sensing space further includes sensing coverage. The UE inputs the transmission parameter, the density distribution information, and the sensing coverage to the computational method corresponding to the type indication, to obtain the coordinates of the N second scattering points in the first sensing space.

For content that is not described in detail in step 902C, refer to the specific implementation in step 502, in which the first communication apparatus determines the coordinates of the N second scattering points in the first sensing space based on the density information of the first sensing space. In this case, the "first communication apparatus" may be replaced with the "UE".

Step 902D: The UE sends the coordinates of the N second scattering points in the first sensing space to the base station. Correspondingly, the base station receives the coordinates of the N second scattering points in the first sensing space from the UE.

It should be noted that, in step 902A to step 902D, the base station may broadcast sensing signals and the density information of the first sensing space. Correspondingly, one or more UEs located in a coverage area of the base station may receive the sensing signals and the density information of the first sensing space from the base station. Alternatively, a coverage area of the base station includes one or more UEs, the base station or the SMF may select UE from the one or more UEs based on the sensing coverage, and the base station sends a sensing signal and the density information of the first sensing space to the selected UE. For content that is not described in detail in this manner, refer to Implementation 1. It may be understood that a difference between Implementation 2 and Implementation 1 lies in that, in Implementation 1, the base station sends the sensing signal to the UE, and correspondingly, the base station determines the coordinates of the N second scattering points; while in Implementation 2, the base station sends the sensing signal and the density information of the first sensing space to the UE, and correspondingly, the UE determines the coordinates of the N second scattering points.

In Implementation 2, each UE can calculate coordinates of N second scattering points, and send the calculated coordinates of the N second scattering points to the base station. In this way, the base station can obtain the coordinates of the N second scattering points calculated by each of a plurality of UEs, and send the coordinates of the N second scattering points calculated by each of the plurality of UEs to the SMF. This helps the SMF aggregate more coordinates of second scattering points and enrich coordinates of known scattering points, thereby further improving sensing accuracy.

Step 903: The base station sends the coordinates of the N second scattering points in the first sensing space to the SMF, and correspondingly, the SMF receives the coordinates of the N second scattering points in the first sensing space from the base station.

Optionally, the SMF updates the density information of the second sensing space based on the coordinates of the N second scattering points in the first sensing space. For example, the SMF adds the coordinates of the N second scattering points in the first sensing space to the density information of the second sensing space.

For content that is not described in detail in step 903, refer to the description in step 503.

It should be noted that, in the embodiment related to FIG. 9, the receive end of the sensing signal may be another base station. The transmit end of the sensing signal may be denoted as a base station 1, and the receive end of the sensing signal may be denoted as a base station 2. The "base station" in the embodiment related to FIG. 9 is replaced with the "base station 1", and the "UE" in the embodiment related to FIG. 9 is replaced with the "base station 2". The base station 2 may be determined by the base station 1 or the SMF based on the sensing coverage.

It should be further noted that, in the embodiment related to FIG. 9, a processing operation of the base station may be performed by a CU, and a sending/receiving operation of the base station may be performed by a DU or an RU; or a processing operation of the base station may be performed by a CU-CP, and a sending/receiving operation of the base station may be performed by a DU or an RU.

### In Implementation 1:

For example, a CU may generate a sensing signal, and the CU may send the sensing signal to a DU. The DU may send the sensing signal to UE, or the DU may send the sensing signal to an RU, and the RU sends the sensing signal to the UE. Similarly, the DU may receive density information of a first sensing space from an SMF and a transmission parameter from the UE, and send the density information of the first sensing space and the transmission parameter to the CU. The CU determines coordinates of N second scattering points in the first sensing space based on the density information of the first sensing space and the transmission parameter. Alternatively, the RU receives density information of a first sensing space from an SMF and a transmission parameter from the UE, and sends the density information of the first sensing space and the transmission parameter to the DU.

In another example, a CU-CP may generate a sensing signal, and the CU-CP may send the sensing signal to a DU. The DU may send the sensing signal to UE, or the DU may send the sensing signal to an RU, and the RU sends the sensing signal to the UE. Similarly, the DU may receive density information of a first sensing space from an SMF and a transmission parameter from the UE, and send the density information of the first sensing space and the transmission parameter to the CU-CP. The CU-CP determines coordinates of N second scattering points in the first sensing space. Alternatively, the RU may receive density information of a first sensing space from an SMF and a transmission parameter from the UE, and send the density information of the first sensing space and the transmission parameter to the DU.

### In Implementation 2:

For example, a CU may generate a sensing signal, and the CU may send the sensing signal to a DU. The DU may send the sensing signal to UE, or the DU may send the sensing signal to an RU, and the RU sends the sensing signal to the UE. Similarly, the DU may receive coordinates of N second scattering points in a first sensing space from the UE, and send the coordinates of the N second scattering points in the first sensing space to the CU. Alternatively, the RU receives coordinates of N second scattering points in a first sensing space from the UE, and sends the coordinates of the N second scattering points in the first sensing space to the DU.

In another example, a CU-CP may generate a sensing signal, and the CU-CP may send the sensing signal to a DU. The DU may send the sensing signal to UE, or the DU may send the sensing signal to an RU, and the RU sends the sensing signal to the UE. Similarly, the DU may receive coordinates of N second scattering points in a first sensing space from the UE, and send the coordinates of the N second scattering points in the first sensing space to the CU-CP. Alternatively, the RU may receive coordinates of N second scattering points in a first sensing space from the UE, and send the coordinates of the N second scattering points in the first sensing space to the DU.

Certainly, the CU, the DU, the RU, and the CU-CP may further perform other operations, which are not listed one by one in this application.

Further, in an O-RAN scenario, the operation performed by the CU may be performed by an O-CU, the operation performed by the DU may be performed by an O-DU, the operation performed by the RU may be performed by an O-RU, and the operation performed by the CU-CP may be performed by an O-CU-CP.

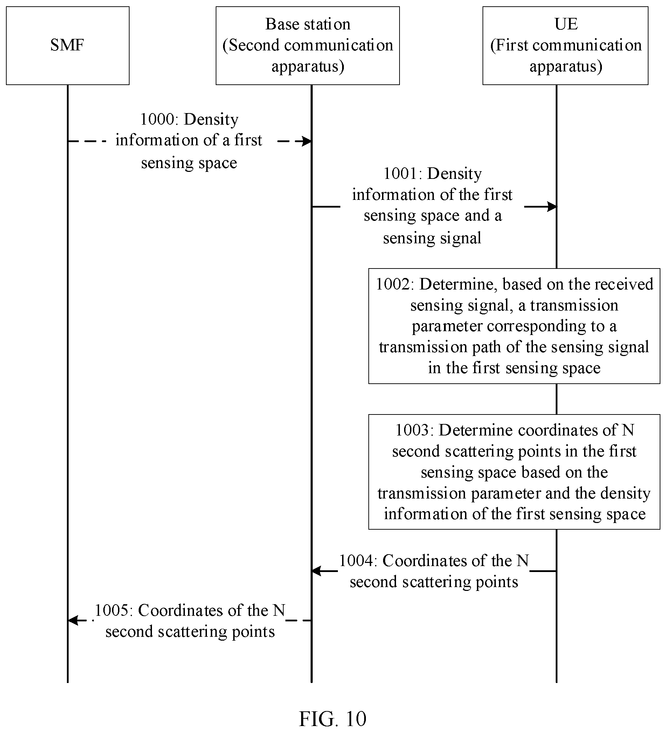

With reference to the diagram of the architecture of the integrated sensing and communication system shown in FIG. 3 and the flowchart of the communication method shown in FIG. 5, FIG. 10 is a flowchart of a communication method in a second specific scenario according to an example of this application.

In FIG. 10, the second communication apparatus is specifically a base station, an SMF and the base station are separately deployed, the first communication apparatus is specifically UE, a transmit end of a sensing signal is the base station, a receive end of the sensing signal is the UE, and the sensing space is specifically a first sensing space.

Step 1001: The base station sends density information of the first sensing space and a sensing signal to the UE, and correspondingly, the UE receives the density information of the first sensing space and the sensing signal from the base station.

The density information of the first sensing space indicates a distribution of M first scattering points in the first sensing space. For content included in the density information of the first sensing space, refer to the description in step 501, where the "sensing space" may be replaced with the "first sensing space".

Optionally, before step 1001, the method further includes step 1000: The SMF sends the density information of the first sensing space to the base station. Correspondingly, the base station receives the density information of the first sensing space from the SMF.

In a possible manner, before sending the density information of the first sensing space to the base station, the SMF first obtains density information of a second sensing space, and the SMF determines the density information of the first sensing space based on the density information of the second sensing space. For a manner in which the SMF obtains the density information of the second sensing space, refer to the description in step 900.

In a possible manner, the density information of the first sensing space further indicates the base station to perform sensing detection on the first sensing space. Alternatively, the SMF may further send a sensing indication to the base station, where the sensing indication indicates the base station to perform sensing detection on the first sensing space. In this case, the SMF sends the sensing indication and the density information of the first sensing space to the base station.

Step 1002: The UE determines, based on the received sensing signal, a transmission parameter corresponding to a transmission path of the sensing signal in the first sensing space. For a specific implementation of step 1002, refer to step 902b in Implementation 1.

Step 1003: The UE determines coordinates of N second scattering points in the first sensing space based on the transmission parameter and the density information of the first sensing space. For details of this step, refer to the description in step 902C.

Step 1004: The UE sends the coordinates of the N second scattering points in the first sensing space to the base station. Correspondingly, the base station receives the coordinates of the N second scattering points in the first sensing space from the UE.

For content that is not described in detail in step 1004, refer to the description in step 503.

Optionally, the method further includes step 1005: The base station sends the coordinates of the N second scattering points in the first sensing space to the SMF. Correspondingly, the SMF receives the coordinates of the N second scattering points in the first sensing space from the base station.

Optionally, the SMF updates the density information of the second sensing space based on the coordinates of the N second scattering points in the first sensing space. For example, the SMF adds the coordinates of the N second scattering points in the first sensing space to the density information of the second sensing space.

In step 1001 to step 1004, there may be one or more UEs. For example, the one or more UEs are one or more UEs located in a coverage area of the base station, or the one or more UEs are determined by the SMF or the base station based on a coverage area of the base station and the sensing coverage. For specific descriptions, refer to the descriptions in the embodiment related to FIG. 9.

It should be noted that, in the embodiment related to FIG. 10, the receive end of the sensing signal may be another base station. The transmit end of the sensing signal may be denoted as a base station 1, and the receive end of the sensing signal may be denoted as a base station 2. The "base station" in the embodiment related to FIG. 10 is replaced with the "base station 1", and the "UE" in the embodiment related to FIG. 8A is replaced with the "base station 2". The base station 2 may be determined by the base station 1 or the SMF based on the sensing coverage.

It should be further noted that, in the embodiment related to FIG. 10, a processing operation of the base station may be performed by a CU, and a sending/receiving operation of the base station may be performed by a DU or an RU; or a processing operation of the base station may be performed by a CU-CP, and a sending/receiving operation of the base station may be performed by a DU or an RU.

For example, a CU may generate a sensing signal, and the CU may send the sensing signal to a DU. The DU may send the sensing signal to UE, or the DU may send the sensing signal to an RU, and the RU sends the sensing signal to the UE. Similarly, the DU may receive coordinates of N second scattering points in a first sensing space from the UE, and send the coordinates of the N second scattering points in the first sensing space to the CU. Alternatively, the RU receives coordinates of N second scattering points in a first sensing space from the UE, and sends the coordinates of the N second scattering points in the first sensing space to the DU.

In another example, a CU-CP may generate a sensing signal, and the CU-CP may send the sensing signal to a DU. The DU may send the sensing signal to UE, or the DU may send the sensing signal to an RU, and the RU sends the sensing signal to the UE. Similarly, the DU may receive coordinates of N second scattering points in a first sensing space from the UE, and send the coordinates of the N second scattering points in the first sensing space to the CU-CP. Alternatively, the RU may receive coordinates of N second scattering points in a first sensing space from the UE, and send the coordinates of the N second scattering points in the first sensing space to the DU.

Certainly, the CU, the DU, the RU, and the CU-CP may further perform other operations, which are not listed one by one in this application.

Further, in an O-RAN scenario, the operation performed by the CU may be performed by an O-CU, the operation performed by the DU may be performed by an O-DU, the operation performed by the RU may be performed by an O-RU, and the operation performed by the CU-CP may be performed by an O-CU-CP.

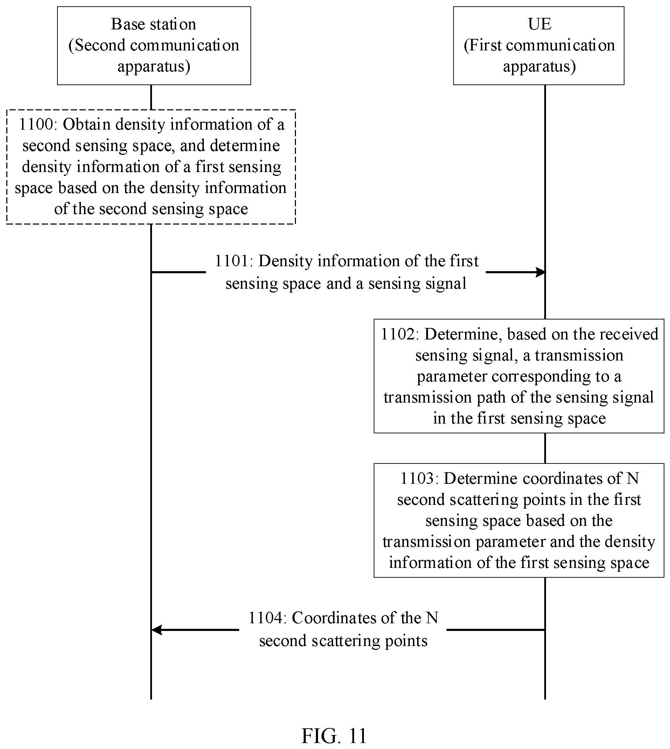

With reference to the diagram of the architecture of the integrated sensing and communication system shown in FIG. 3 and the flowchart of the communication method shown in FIG. 5, FIG. 11 is a flowchart of a communication method in a third specific scenario according to an example of this application.

In FIG. 11, the second communication apparatus is specifically a base station, an SMF and the base station are deployed together (that is, the base station includes the SMF, and the following uses the base station as an example for description), the first communication apparatus is specifically UE, a transmit end of a sensing signal is the base station, a receive end of the sensing signal is the UE, the sensing space is specifically a first sensing space, and the UE calculates coordinates of N second scattering points.

Step 1101: The base station sends density information of the first sensing space and a sensing signal to the UE, and correspondingly, the UE receives the density information of the first sensing space and the sensing signal from the base station.

The density information of the first sensing space indicates a distribution of M first scattering points in the first sensing space. For content included in the density information of the first sensing space, refer to the description in step 501, where the "sensing space" may be replaced with the "first sensing space".

Optionally, before step 1101, the method further includes step 1100: The base station obtains density information of a second sensing space, and determines the density information of the first sensing space based on the density information of the second sensing space. For a manner in which the base station obtains the density information of the second sensing space, refer to the description in step 900, where the "SMF" in step 900 may be replaced with the "base station".

Step 1102: The UE determines, based on the received sensing signal, a transmission parameter corresponding to a transmission path of the sensing signal in the first sensing space. For a specific implementation of step 1102, refer to step 902b in Implementation 1.

Step 1103: The UE determines coordinates of N second scattering points in the first sensing space based on the transmission parameter and the density information of the first sensing space. For details of this step, refer to the description in step 902C in Implementation 2.

Step 1104: The UE sends the coordinates of the N second scattering points in the first sensing space to the base station. Correspondingly, the base station receives the coordinates of the N second scattering points in the first sensing space from the UE. For content that is not described in detail in step 1104, refer to the description in step 503.

In step 1101 to step 1104, there may be one or more UEs. For example, the one or more UEs are one or more UEs located in a coverage area of the base station, or the one or more UEs are determined by the SMF or the base station based on a coverage area of the base station and the sensing coverage. For specific descriptions, refer to the descriptions in the embodiment related to FIG. 9.

It should be noted that, in the embodiment related to FIG. 11, the receive end of the sensing signal may be another base station. The transmit end of the sensing signal may be denoted as a base station 1, and the receive end of the sensing signal may be denoted as a base station 2. The "base station" in the embodiment related to FIG. 11 is replaced with the "base station 1", and the "UE" in the embodiment related to FIG. 11 is replaced with the "base station 2". The base station 2 may be determined by the base station 1 or the SMF based on the sensing coverage.

It should be further noted that, in the embodiment related to FIG. 11, a processing operation of the base station may be performed by a CU, and a sending/receiving operation of the base station may be performed by a DU or an RU; or a processing operation of the base station may be performed by a CU-CP, and a sending/receiving operation of the base station may be performed by a DU or an RU.

For example, a CU may generate a sensing signal and obtain density information of a second sensing space, and the CU may send the sensing signal and the density information of the second sensing space to a DU. The DU may send the sensing signal and the density information of the second sensing space to UE, or the DU may send the sensing signal and the density information of the second sensing space to an RU, and the RU sends the sensing signal and the density information of the second sensing space to the UE. Similarly, the DU may receive coordinates of N second scattering points in a first sensing space from the UE, and send the coordinates of the N second scattering points in the first sensing space to the CU. Alternatively, the RU may receive coordinates of N second scattering points in a first sensing space from the UE, and send the coordinates of the N second scattering points in the first sensing space to the DU.

In another example, a CU-CP may generate a sensing signal and obtain density information of a second sensing space, and the CU-CP may send the sensing signal and the density information of the second sensing space to a DU. The DU may send the sensing signal and the density information of the second sensing space to UE, or the DU may send the sensing signal and the density information of the second sensing space to an RU, and the RU sends the sensing signal and the density information of the second sensing space to the UE. Similarly, the DU may receive coordinates of N second scattering points in a first sensing space from the UE, and send the coordinates of the N second scattering points in the first sensing space to the CU-CP. Alternatively, the RU may receive coordinates of N second scattering points in a first sensing space from the UE, and send the coordinates of the N second scattering points in the first sensing space to the DU.

Certainly, the CU, the DU, the RU, and the CU-CP may further perform other operations, which are not listed one by one in this application.

Further, in an O-RAN scenario, the operation performed by the CU may be performed by an O-CU, the operation performed by the DU may be performed by an O-DU, the operation performed by the RU may be performed by an O-RU, and the operation performed by the CU-CP may be performed by an O-CU-CP.

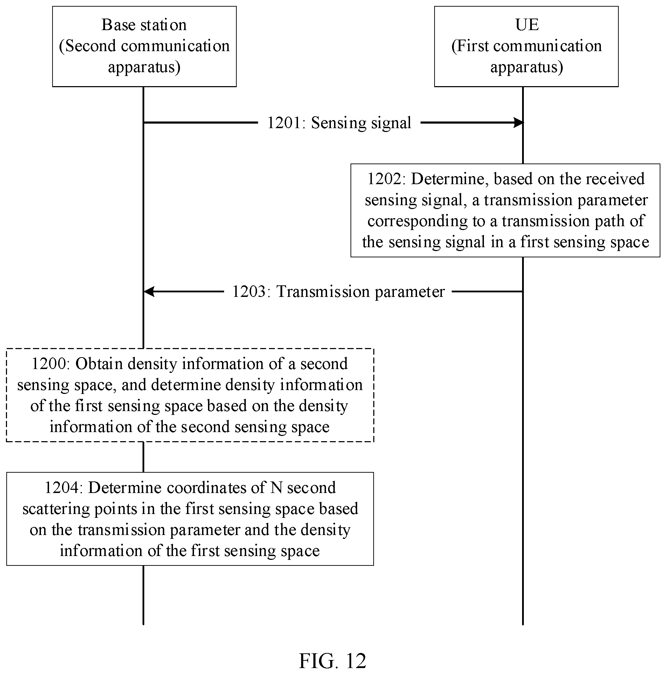

With reference to the diagram of the architecture of the integrated sensing and communication system shown in FIG. 3 and the flowchart of the communication method shown in FIG. 5, FIG. 12 is a flowchart of a communication method in a fourth specific scenario according to an example of this application.

In FIG. 12, the second communication apparatus is specifically a base station, an SMF and the base station are deployed together (that is, the base station includes the SMF, and the following uses the base station as an example for description), the first communication apparatus is specifically UE, a transmit end of a sensing signal is the base station, a receive end of the sensing signal is the UE, the sensing space is specifically a first sensing space, and the base station calculates coordinates of N second scattering points.

Step 1201: The base station sends a sensing signal to the UE, and correspondingly, the UE receives the sensing signal from the base station.

Step 1202: The UE determines, based on the received sensing signal, a transmission parameter corresponding to a transmission path of the sensing signal in the first sensing space. For a specific implementation of step 1102, refer to step 902b in Implementation 1.

Step 1203: The UE sends the transmission parameter to the base station. Correspondingly, the base station receives the transmission parameter from the UE.

Step 1204: The base station determines coordinates of N second scattering points in the first sensing space based on the transmission parameter and the density information of the first sensing space. For a specific implementation, refer to the description in step 902d in Implementation 1.

The density information of the first sensing space indicates a distribution of M first scattering points in the first sensing space. For content included in the density information of the first sensing space, refer to the description in step 501, where the "sensing space" may be replaced with the "first sensing space".

Optionally, before step 1204, the method further includes step 1200: The base station obtains density information of a second sensing space, and the base station determines the density information of the first sensing space based on the density information of the second sensing space. For a manner in which the base station obtains the density information of the second sensing space, refer to the description in step 900, where the "SMF" in step 900 may be replaced with the "base station".

It should be noted that, in the embodiment related to FIG. 12, the receive end of the sensing signal may be another base station. The transmit end of the sensing signal may be denoted as a base station 1, and the receive end of the sensing signal may be denoted as a base station 2. The "base station" in the embodiment related to FIG. 11 is replaced with the "base station 1", and the "UE" in the embodiment related to FIG. 12 is replaced with the "base station 2". The base station 2 may be determined by the base station 1 or the SMF based on the sensing coverage.

It should be further noted that, in the embodiment related to FIG. 12, a processing operation of the base station may be performed by a CU, and a sending/receiving operation of the base station may be performed by a DU or an RU; or a processing operation of the base station may be performed by a CU-CP, and a sending/receiving operation of the base station may be performed by a DU or an RU.

For example, a CU may generate a sensing signal and obtain density information of a second sensing space, and the CU may send the sensing signal to a DU. The DU may send the sensing signal to UE, or the DU may send the sensing signal to an RU, and the RU sends the sensing signal to the UE. Similarly, the DU may receive a transmission parameter from the UE, and send the transmission parameter to the CU. Alternatively, the RU may receive a transmission parameter from the UE, and send the transmission parameter to the DU. The CU may further determine coordinates of N second scattering points in a first sensing space based on the density information of the second sensing space and the transmission parameter.

In another example, a CU-CP may generate a sensing signal and obtain density information of a second sensing space, and the CU-CP may send the sensing signal to a DU. The DU may send the sensing signal to UE, or the DU may send the sensing signal to an RU, and the RU sends the sensing signal to the UE. Similarly, the DU may receive a transmission parameter from the UE, and send the transmission parameter to the CU-CP. Alternatively, the RU may receive a transmission parameter from the UE, and send the transmission parameter from the UE to the DU. The CU may further determine coordinates of N second scattering points in a first sensing space based on the density information of the second sensing space and the transmission parameter.

Certainly, the CU, the DU, the RU, and the CU-CP may further perform other operations, which are not listed one by one in this application.

Further, in an O-RAN scenario, the operation performed by the CU may be performed by an O-CU, the operation performed by the DU may be performed by an O-DU, the operation performed by the RU may be performed by an O-RU, and the operation performed by the CU-CP may be performed by an O-CU-CP.

It may be understood that, to implement functions in the foregoing embodiments, the SMF, the base station, and the UE include corresponding hardware structures and/or software modules for performing the functions. A person skilled in the art should easily be aware that, in combination with the units and method steps of the examples described in embodiments disclosed in this application, this application can be implemented by hardware or a combination of hardware and computer software. Whether a function is performed by hardware or hardware driven by computer software depends on particular application scenarios and design constraints of the technical solutions.

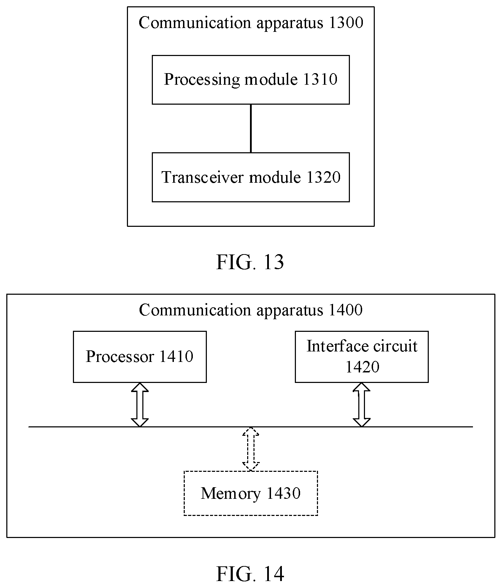

FIG. 13 and FIG. 14 are diagrams of possible structures of communication apparatuses according to embodiments of this application. These communication apparatuses may be configured to implement the functions of the first communication apparatus or the second communication apparatus in the foregoing method embodiments, that is, configured to implement the functions of the SMF, the base station, or the UE in the foregoing method embodiments. Therefore, beneficial effects of the foregoing method embodiments can also be achieved.

In an embodiment of this application, the communication apparatus may be one of the UEs 120a to 120j shown in FIG. 1, or may be the base station 110a or 110b shown in FIG. 1. Alternatively, the communication apparatus may be any base station shown in FIG. 4, or any UE shown in FIG. 4, or the SMF shown in FIG. 4, or may be a module (for example, a chip) used in the SMF, the UE, or the base station.

As shown in FIG. 13, the communication apparatus 1300 includes a processing module 1310 and a transceiver module 1320. The communication apparatus 1300 is configured to implement the functions of the first communication apparatus or the second communication apparatus in the method embodiments related to FIG. 5 to FIG. 12.

When the communication apparatus 1300 is configured to implement the functions of the first communication apparatus in the method embodiments related to FIG. 5 to FIG. 12:

The transceiver module 1320 is configured to receive density information, where the density information indicates a distribution of M first scattering points in a sensing space; the processing module 1310 is configured to determine coordinates of N second scattering points in the sensing space based on the density information; and the transceiver module 1320 is further configured to send the coordinates of the N second scattering points in the sensing space, where M and N are integers greater than 1.

In a possible implementation, the sensing space includes a plurality of sensing subspaces, and the density information includes a quantity of first scattering points included in each of the plurality of sensing subspaces.

In a possible implementation, the density information includes sensing coverage, the sensing space is determined based on the sensing coverage, and the sensing coverage is determined based on one or more of the following: a position of a transmit end of a sensing signal, a position of a receive end of a sensing signal, a transmitting angle of a sensing signal, or a receiving angle of a sensing signal. For example, the sensing coverage includes coordinate ranges of the sensing space along x-, y-, and z-axes in a world coordinate system.

In a possible implementation, the density information includes a type indication, and the type indication indicates a computational method for determining the coordinates of the N second scattering points. For example, the computational method includes: determining the coordinates of the N second scattering points based on the quantity of the first scattering points included in each of the plurality of sensing subspaces, where the sensing space includes the plurality of sensing subspaces; and/or determining the coordinates of the N second scattering points based on coordinates of the M first scattering points.

In a possible implementation, when determining the coordinates of the N second scattering points in the sensing space based on the density information, the processing module 1310 is specifically configured to: determine the coordinates of the N second scattering points in the sensing space based on the density information and a received sensing signal. For example, when determining the coordinates of the N second scattering points in the sensing space based on the density information and the received sensing signal, the processing module 1310 is specifically configured to: determine, based on the received sensing signal, a transmission parameter corresponding to a transmission path of the sensing signal in the sensing space, where the transmission path includes the N second scattering points; and determine the coordinates of the N second scattering points in the sensing space based on the density information and the transmission parameter, where the transmission parameter includes at least one or more of the following: transmission duration of the sensing signal, a transmitting angle of the sensing signal, or a receiving angle of the sensing signal.

When the communication apparatus 1300 is configured to implement the functions of the second communication apparatus in the method embodiments related to FIG. 5 to FIG. 12:

The processing module 1310 is configured to determine density information; and the transceiver module 1320 is configured to send the density information, where the density information indicates a distribution of M first scattering points in a sensing space; and is configured to receive coordinates of N second scattering points in the sensing space, where the coordinates of the N second scattering points in the sensing space are determined based on the density information, and M and N are integers greater than 1.

In a possible implementation, the processing module 1310 is further configured to update the density information based on the coordinates of the N second scattering points.

In a possible implementation, the sensing space includes a plurality of sensing subspaces, and the density information includes a quantity of first scattering points included in each of the plurality of sensing subspaces.

In a possible implementation, the density information includes sensing coverage, the sensing space is determined based on the sensing coverage, and the sensing coverage is determined based on one or more of the following: a position of a transmit end of a sensing signal, a position of a receive end of a sensing signal, a transmitting angle of a sensing signal, or a receiving angle of a sensing signal. For example, the sensing coverage includes coordinate ranges of the sensing space along x-, y-, and z-axes in a world coordinate system.

In a possible implementation, the density information includes a type indication, and the type indication indicates a computational method for determining the coordinates of the N second scattering points.

For more detailed descriptions of the processing module 1310 and the transceiver module 1320, directly refer to the related descriptions in the method embodiments related to FIG. 5 to FIG. 12. Details are not described herein again.

As shown in FIG. 14, the communication apparatus 1400 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include a memory 1430, configured to: store instructions to be executed by the processor 1410, or store input data required for running the instructions by the processor 1410, or store data generated after the processor 1410 runs the instructions.

When the communication apparatus 1400 is configured to implement the methods in the method embodiments related to FIG. 5 to FIG. 12, the processor 1410 is configured to implement functions of the processing module 1310, and the interface circuit 1420 is configured to implement functions of the transceiver module 1320.

When the communication apparatus is a chip used in UE, the chip in the UE implements the functions of the UE in the foregoing method embodiments. The chip in the UE receives information from another module (for example, a radio frequency module or an antenna) in the UE, where the information is sent by a base station to the UE. Alternatively, the chip in the UE sends information to another module (for example, a radio frequency module or an antenna) in the UE, where the information is sent by the UE to a base station.

When the communication apparatus is a module used in a base station, the module in the base station implements the functions of the base station in the foregoing method embodiments. The module in the base station receives information from another module (for example, a radio frequency module or an antenna) in the base station, where the information is sent by an SMF or UE to the base station. Alternatively, the module in the base station sends information to another module (for example, a radio frequency module or an antenna) in the base station, where the information is sent by the base station to an SMF or UE. The module in the base station herein may be a baseband chip of the base station, or may be a DU or another module. The DU herein may be an O-DU in an O-RAN architecture.

When the communication apparatus is a chip used in an SMF, the chip in the SMF implements the functions of the SMF in the foregoing method embodiments. The chip in the SMF receives information from another module in the SMF, where the information is sent by a base station to the SMF. Alternatively, the chip in the SMF sends information to another module in the SMF, where the information is sent by the SMF to a base station.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in an SMF, a base station, or UE. Certainly, the processor and the storage medium may alternatively exist in an SMF, a base station, or UE as discrete components.

All or some of the foregoing embodiments may be implemented by using software, hardware, firmware, or any combination thereof. When implemented by using software, all or some of the embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural.

In the text descriptions of this application, the character "/" usually indicates an "or" relationship between associated objects. In the formula of this application, the character "/" indicates a "division" relationship between associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean a sequence of performing the processes, and the sequence of performing the processes should be determined based on functions and internal logic of the processes.

## Claims

1. A communication method, comprising:
receiving density information, wherein the density information indicates a distribution of M first scattering points in a sensing space;
determining coordinates of N second scattering points in the sensing space based on the density information; and
sending the coordinates of the N second scattering points in the sensing space, wherein
M and N are integers greater than 1.

2. The method according to claim 1, wherein the sensing space comprises a plurality of sensing subspaces, and the density information comprises a quantity of thefirst scattering points comprised in each of the plurality of sensing subspaces.

3. The method according to claim 1 or 2, wherein the density information comprises sensing coverage, the sensing space is determined based on the sensing coverage, and the sensing coverage is determined based on one or more of the following: a position of a transmit end of a sensing signal, a position of a receive end of a sensing signal, a transmitting angle of a sensing signal, or a receiving angle of a sensing signal.

4. The method according to any one of claims 1 to 3, wherein the density information comprises the sensing coverage, and the sensing coverage comprises coordinate ranges of the sensing space along x-, y-, and z-axes in a world coordinate system.

5. The method according to claim 1, 3, or 4, wherein the density information comprises a type indication, and the type indication indicates a computational method for determining the coordinates of the N second scattering points.

6. The method according to claim 5, wherein the computational methodcomprises:
determining the coordinates of the N second scattering points based on the quantity of the first scattering points comprised in each of the plurality of sensing subspaces, wherein the sensing space comprises the plurality of sensing subspaces; and/or
determining the coordinates of the N second scattering points based on coordinates of the M first scattering points.

7. The method according to any one of claims 1 to 6, wherein determining the coordinates of the N second scattering points in the sensing space based on the density information comprises:
determining the coordinates of the N second scattering points in the sensing space based on the density information and a received sensing signal.

8. The method according to claim 7, wherein determining the coordinates of the N second scattering points in the sensing space based on the density information and the received sensing signal comprises:
determining, based on the received sensing signal, a transmission parameter corresponding to a transmission path of the sensing signal in the sensing space, wherein the transmission path comprises the N second scattering points; and
determining the coordinates of the N second scattering points in the sensing space based on the density information and the transmission parameter, wherein
the transmission parameter comprises at least one or more of the following: transmission duration of the sensing signal, a transmitting angle of the sensing signal, or a receiving angle of the sensing signal.

9. A communication method, comprising:
sending density information, wherein the density information indicates a distribution of M first scattering points in a sensing space; and
receiving coordinates of N second scattering points in the sensing space, wherein the coordinates of the N second scattering points in the sensing space are determined based on the density information, and M and N are integers greater than 1.

10. The method according to claim 9, wherein the sensing space comprises a plurality of sensing subspaces, and the density information comprises a quantity of the first scattering points comprised in each of the plurality of sensing subspaces.

11. The method according to claim 9 or 10, wherein the density information comprises sensing coverage, the sensing space is determined based on the sensing coverage, and the sensing coverage is determined based on one or more of the following: a position of a transmit end of a sensing signal, a position of a receive end of a sensing signal, a transmitting angle of a sensing signal, or a receiving angle of a sensing signal.

12. The method according to any one of claims 9 to 11, wherein the density information comprises the sensing coverage, and the sensing coverage comprises coordinate ranges of the sensing space along x-, y-, and z-axes in a world coordinate system.

13. The method according to claim 9, 11, or 12, wherein the density information comprises a type indication, and the type indication indicates a computational method for determining the coordinates of the N second scattering points.

14. A communication apparatus, comprising:
a transceiver module, configured to receive density information, wherein the density information indicates a distribution of M first scattering points in a sensing space; and
a processing module, configured to determine coordinates of N second scattering points in the sensing space based on the density information, wherein
the transceiver module is further configured to send the coordinates of the N second scattering points in the sensing space, wherein
M and N are integers greater than 1.

15. The apparatus according to claim 14, wherein the sensing space comprises a plurality of sensing subspaces, and the density information comprises a quantity of the first scattering points comprised in each of the plurality of sensing subspaces.

16. The apparatus according to claim 14 or 15, wherein the density information comprises sensing coverage, the sensing space is determined based on the sensing coverage, and the sensing coverage is determined based on one or more of the following: a position of a transmit end of a sensing signal, a position of a receive end of a sensing signal, a transmitting angle of a sensing signal, or a receiving angle of a sensing signal.

17. The apparatus according to any one of claims 14 to 16, wherein the density information comprises the sensing coverage, and the sensing coverage comprises coordinate ranges of the sensing space along x-, y-, and z-axes in a world coordinate system.

18. The apparatus according to claim 14, 16, or 17, wherein the density information comprises a type indication, and the type indication indicates the processing module to determine a computational method for the coordinates of the N second scattering points.

19. The apparatus according to claim 18, wherein the computational methodcomprises:
determining the coordinates of the N second scattering points based on the quantity of the first scattering points comprised in each of the plurality of sensing subspaces, wherein the sensing space comprises the plurality of sensing subspaces; and/or
determining the coordinates of the N second scattering points based on coordinates of the M first scattering points.

20. The apparatus according to any one of claims 14 to 19, wherein when determining the coordinates of the N second scattering points in the sensing space based on the density information, the processing module is specifically configured to:
determine the coordinates of the N second scattering points in the sensing space based on the density information and a received sensing signal.

21. The apparatus according to claim 20, wherein when determining the coordinates of the N second scattering points in the sensing space based on the density information and the received sensing signal, the processing module is specifically configured to:
determine, based on the received sensing signal, a transmission parameter corresponding to a transmission path of the sensing signal in the sensing space, wherein the transmission path comprises the N second scattering points; and
determine the coordinates of the N second scattering points in the sensing space based on the density information and the transmission parameter, wherein
the transmission parameter comprises at least one or more of the following: transmission duration of the sensing signal, a transmitting angle of the sensing signal, or a receiving angle of the sensing signal.

22. A communication apparatus, comprising:
a processing module, configured to determine density information, wherein the density information indicates a distribution of M first scattering points in a sensing space; and
a transceiver module, configured to: send the density information; and receive coordinates of N second scattering points in the sensing space, wherein the coordinates of the N second scattering points in the sensing space are determined based on the density information, and M and N are integers greater than 1.

23. The apparatus according to claim 22, wherein the sensing space comprises a plurality of sensing subspaces, and the density information comprises a quantity of the first scattering points comprised in each of the plurality of sensing subspaces.

24. The apparatus according to claim 22 or 23, wherein the density information comprises sensing coverage, the sensing space is determined based on the sensing coverage, and the sensing coverage is determined based on one or more of the following: a position of a transmit end of a sensing signal, a position of a receive end of a sensing signal, a transmitting angle of a sensing signal, or a receiving angle of a sensing signal.

25. The apparatus according to any one of claims 22 to 24, wherein the density information comprises the sensing coverage, and the sensing coverage comprises coordinate ranges of the sensing space along x-, y-, and z-axes in a world coordinate system.

26. The apparatus according to claim 22, 24, or 25, wherein the density information comprises a type indication, and the type indication indicates a computational method for determining the coordinates of the N second scattering points.

27. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 8 by using a logic circuit or by executing code instructions, or the processor is configured to implement the method according toany one of claims 9 to 13 by using a logic circuit or by executing code instructions.

28. A computer-readable storage medium, wherein the storage medium stores a computer program or instructions, and when the computer program or the instructions are executed by a communication apparatus, the method according to any one of claims 1 to 8 is implemented, or the method according toany one of claims 9 to 13 is implemented.

29. A computer program product, wherein the computer program product comprises a computer program or instructions, and when the computer program or the instructions are executed by a communication apparatus, the method according to any one of claims 1 to 8 is implemented, or the method according toany one of claims 9 to 13 is implemented.
